# EUROPEAN PATENT SPECIFICATION

(11) **EP 4 722 859 B1**
(45) Date of publication and mention of the grant of the patent: **21.10.2026**
(21) Application number: 24209607.1
(22) Date of filing: 29.10.2024
(51) Int. Cl.: G06F 1/3209, G06F 1/3215, G06F 1/3234, G06F 1/3287, G06F 3/01, G06F 3/03, H04N 23/65, G02B 27/01

(54) **TRACKING SYSTEM AND TRACKING METHOD FOR POWER SAVING**
VERFOLGUNGSSYSTEM UND VERFOLGUNGSVERFAHREN ZUR ENERGIEEINSPARUNG
SYSTÈME DE SUIVI ET PROCÉDÉ DE SUIVI POUR ÉCONOMISER DE L'ÉNERGIE

(30) Priority: 01.10.2024 US 202418902951
(43) Date of publication of application: 08.04.2026
(73) Proprietor: HTC Corporation, Taoyuan City 330 (TW)
(72) Inventor: HUANG, Chao-Shuan, Taoyuan City 330 (TW)
(74) Representative: Klang, Alexander H.

(56) References cited:
- US-A1- 2014 145 914
- US-A1- 2018 329 516
- US-A1- 2020 363 643

## Description

### BACKGROUND

### Technical Field

This disclosure relates to an extended reality (XR) technology, and in particular to a tracking system and a tracking method for power saving.

### Description of Related Art

In an XR system, a head-mounted display (HMD) is often used with a portable device. In order to interact with the portable device, the head-mounted display needs to track the position of the portable device. However, the tracking technology used in the XR system may be affected by the environment and may not perform well. In addition, tracking a portable device may consume a significant amount of power from the head-mounted display or portable device. Attention is drawn to US 2018/329516 A1 relating to a computing device configured to receive from an image sensor of a head-mounted device environmental tracking exposures and handheld object tracking exposures, determine a pose of the handheld object with respect to the head-mounted device based upon the handheld object tracking exposures, determine a pose of the head-mounted device with respect to a surrounding environment based upon the environmental tracking exposures, derive a pose of the handheld object relative to the surrounding environment based upon the pose of the handheld object with respect to the head-mounted device and the pose of the head-mounted device with respect to the surrounding environment, and output the pose of the handheld object relative to the surrounding environment for controlling a user interface displayed on the head-mounted device.
Further attention is drawn to US 2014/145914 A1 relating to resource management in a head-mounted display device. The head-mounted display device includes a plurality of sensors and a display system for presenting holographic objects. A resource management program is configured to operate a selected sensor in a default power mode to achieve a selected fidelity. The program receives user-related information from one or more of the sensors, and determines whether target information is detected. Where target information is detected, the program adjusts the selected sensor to operate in a reduced power mode that uses less power than the default power mode. Additional attention is drawn to US 2020/363643 A1 relating to dynamically controlling light sources on an optically trackable peripheral device. A near-eye display device comprises an image sensor, a communications subsystem, a logic subsystem, and a storage subsystem. The storage subsystem stores instructions executable by the logic subsystem to control a peripheral device comprising a plurality of light sources by receiving image data from the image sensor, identifying in the image data a constellation of light sources formed by a subset of light sources of the peripheral device, and based upon the constellation of light sources identified, send to the peripheral device via the communications subsystem constellation information related to the constellation of light sources identified.

### SUMMARY

The invention is defined by the appended independent claims. Further embodiments are defined by the appended dependent claims. The disclosure provides a tracking system and a tracking method for power saving, capable of saving power consumption of tracking mobile devices.

A tracking system for power saving of the disclosure includes a first mobile device and a second mobile device. The first mobile device includes a sensor and a first light source. A second mobile device is communicatively connected to the first mobile device. The first mobile device adjusts at least one of first power consumption of the sensor and second power consumption of the first light source, and executes at least one of the following. Sensed data is obtained according to the adjusted first power consumption; and illumination of the first light source is adjusted according to the adjusted second power consumption. The second mobile device tracks the first mobile device according to at least one of the sensed data and the illumination of the first light source.

In one embodiment of the disclosure, the second mobile device includes an image capture device. The second mobile device detects the illumination to determine whether the first light source is located in a field of view of the image capture device. In response to the first light source being located in the field of view, the first mobile device reduces the first power consumption of the sensor.

In one embodiment of the disclosure, in response to the first light source being outside the field of view, the first mobile device reduces the second power consumption of the first light source.

In one embodiment of the disclosure, the first mobile device adjusts the second power consumption of the first light source, so that the second power consumption is proportional to a distance between the first mobile device and the second mobile device.

In one embodiment of the disclosure, the sensed data includes a movement speed of the first mobile device. The first mobile device adjusts the first power consumption of the sensor, so that the first power consumption is proportional to the movement speed.

In one embodiment of the disclosure, the sensed data includes a movement speed of the first mobile device. The first mobile device adjusts the second power consumption of the first light source, so that the second power consumption is proportional to the movement speed.

In one embodiment of the disclosure, the second mobile device includes an image capture device, and the sensed data includes a movement speed of the first mobile device. The second mobile device adjusts third power consumption of the image capture device, so that the third power consumption is proportional to the movement speed.

In one embodiment of the disclosure, the sensed data includes a posture of the first mobile device. The first mobile device adjusts the second power consumption of the first light source according to the posture.

In one embodiment of the disclosure, the second mobile device includes an image capture device, and the sensed data includes a posture of the first mobile device. The second mobile device adjusts third power consumption of the image capture device according to the posture.

In one embodiment of the disclosure, the sensed data includes ambient brightness. The first mobile device adjusts at least one of the first power consumption and the second power consumption according to the ambient brightness.

In one embodiment of the disclosure, the second mobile device includes an image capture device, and the sensed data includes ambient brightness. The second mobile device adjusts third power consumption of the image capture device according to the ambient brightness.

In one embodiment of the disclosure, the sensor includes an image capture device. The first mobile device reduces the first power consumption of the sensor according to at least one of the following environmental factors: lack of texture, reflection, repeating patterns, and open space.

In one embodiment of the disclosure, the sensor includes an electronic compass. The first mobile device reduces the first power consumption of the sensor according to at least one of the following environmental factors: metal layout; magnetic field distribution, and electric field distribution.

In one embodiment of the disclosure, the first mobile device reduces the second power consumption of the first light source according to environmental factors including electromagnetic wave distribution.

In one embodiment of the disclosure, the sensor includes at least one of the following: an image capture device, an electronic compass, a magnetometer, and an accelerometer.

In an embodiment of the disclosure, the first light source includes at least one of the following: an infrared light-emitting diode and a laser device.

A tracking method for power saving of the disclosure includes the following. A first mobile device adjusts at least one of first power consumption of a sensor of the first mobile device and second power consumption of a first light source of the first mobile device. The first mobile device executes at least one of the following. Sensed data is obtained according to the adjusted first power consumption; and illumination of the first light source is adjusted according to the adjusted second power consumption. A second mobile device tracks the first mobile device according to at least one of the sensed data and the illumination of the first light source.

Based on the above, the tracking system of the disclosure can dynamically adjust the power consumption of the sensor or the light source of the mobile device according to factors such as environmental information or the status of the mobile device to achieve accurate tracking of the mobile device and power saving

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate example embodiments of the disclosure and, together with the description, serve to explain the principles of the disclosure.
FIG. 1 illustrates a schematic diagram of a tracking system for power saving according to an embodiment of the disclosure.
FIG. 2 illustrates a schematic diagram of a light source located in a field of view of an image capture device according to an embodiment of the disclosure.
FIG. 3 illustrates a schematic diagram of a light source located outside a field of view of an image capture device according to an embodiment of the disclosure.
FIG. 4 illustrates a schematic diagram of multiple light sources respectively located in a field of view and outside the field of view of an image capture device according to an embodiment of the disclosure.
FIG. 5 illustrates a schematic diagram of relative positions of mobile devices according to an embodiment of the disclosure.
FIG. 6 illustrates a flow chart of a tracking method for power saving according to an embodiment of the disclosure.

### DESCRIPTION OF THE EMBODIMENTS

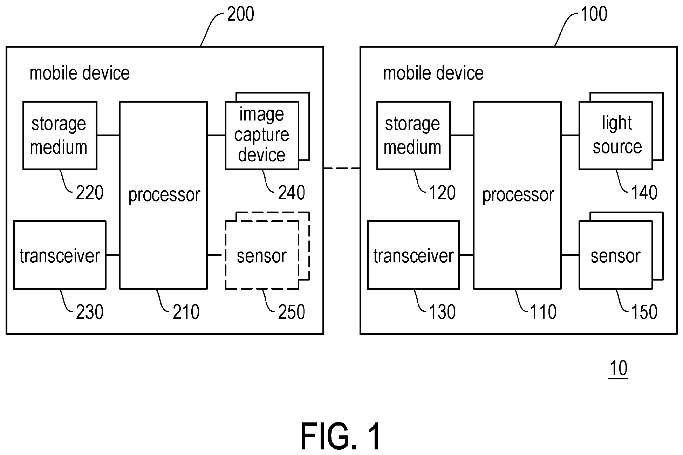

FIG. 1 illustrates a schematic diagram of a tracking system 10 for power saving according to an embodiment of the disclosure. The tracking system 10 may include a mobile device 100 and a mobile device 200. The mobile device 200 may communicate with the mobile device 100. In one embodiment, the mobile device 200 may be a head-mounted display, and the mobile device 100 may be a portable device (e.g., a wireless controller) for operating the head-mounted display or for interacting with the head-mounted display. The head-mounted display can be worn on the head of a user and can provide the user with an XR environment (or XR scene), such as a virtual reality (VR) environment, an augmented reality (AR) environment, or a mixed reality (MR) environment. The user can operate the portable device to send control commands to the head-mounted display to interact with the head-mounted display. In one embodiment, the portable device may be used to capture movements of the user. The head-mounted display can determine current actions of the user according to the portable device carried by the user.

The mobile device 100 may include a processor 110, a storage medium 120, a transceiver 130, one or more light sources 140, and one or more sensors 150. The processor 110 is, for example, a central processing unit (CPU), or other programmable general-purpose or special-purpose micro control unit (MCU), microprocessor, digital signal processor (DSP), programmable controller, application specific integrated circuit (ASIC), graphics processing unit (GPU), image signal processor (ISP), image processing unit (IPU), arithmetic logic unit (ALU), complex programmable logic device (CPLD), field programmable gate array (FPGA), or other similar components or a combination of the above components. The processor 110 can be coupled to the storage medium 120, the transceiver 130, the light source 140, and the sensor 150, and access and execute multiple modules and various applications stored in the storage medium 120.

The storage medium 120 is, for example, any type of fixed or removable random access memory (RAM), read-only memory (ROM), or flash memory, hard disk drive (HDD), solid state drive (SSD), or similar components or a combination of the above components, used to store multiple modules or various applications that can be executed by the processor 110.

The transceiver 130 transmits or receives signals in a wireless or wired manner. The transceiver 130 may also perform, for example, low noise amplification, impedance matching, mixing, up or down frequency conversion, filtering, amplification, and similar operations. The processor 110 can communicate with the mobile device 200 through the transceiver 130. The processor 110 may use the transceiver 130 to transmit wireless signals (e.g., sensed data obtained by the sensor 150) to the mobile device 200 or receive wireless signals (e.g., information obtained by an image capture device 240 or sensed data obtained by a sensor 250).

The light source 140 of the mobile device 100 can provide illumination to be tracked by the mobile device 200. The light source 140 may include but is not limited to an infrared light-emitting diode (IR LED) or a laser device. The processor 110 can dynamically adjust power consumption of the light source 140.

The sensor 150 can generate sensed data. The sensor 150 may include but is not limited to an image capture device, an electronic compass, a magnetometer, or an accelerometer (e.g., an inertial measurement unit (IMU)). The mobile device 100 can implement self-tracking or implement its own pose estimation according to the sensed data. The processor 110 can dynamically adjust the power consumption of the sensor 150. For example, the processor 110 may cause the power consumption of the sensor 150 to be reduced by decreasing a frame rate or gain of the sensor 150.

The mobile device 200 may include a processor 210, a storage medium 220, a transceiver 230, and an image capture device 240. In one embodiment, the mobile device 200 may further include one or more sensors 250.

The processor 210 is, for example, a CPU, or other programmable general-purpose or special-purpose MCU, microprocessor, DSP, programmable controller, ASIC, GPU, ISP, IPU, ALU, CPLD, FPGA, or similar components or a combination of the above components. The processor 210 can be coupled to the storage medium 220, the transceiver 230, the image capture device 240, and the sensor 250, and access and execute multiple modules and various applications stored in the storage medium 220.

The storage medium 220 is, for example, any type of fixed or removable RAM, ROM, flash memory, HDD, SSD, or similar components or a combination of the above components, and is used to store multiple modules or various applications that can be executed by the processor 210.

The transceiver 230 transmits or receives signals in a wireless or wired manner. The transceiver 230 may also perform, for example, low noise amplification, impedance matching, mixing, up or down frequency conversion, filtering, amplification, and similar operations. The processor 210 can communicate with the mobile device 100 through the transceiver 230. The processor 210 may use the transceiver 230 to transmit wireless signals to or receive wireless signals from the mobile device 100.

The image capture device 240 is, for example, a camera used to capture images. The image capture device 240 may include a photosensitive element such as a complementary metal oxide semiconductor (CMOS) or a charge coupled device (CCD). The processor 210 can dynamically adjust the power consumption of the image capture device 240. For example, the processor 110 may cause the power consumption of the image capture device 240 to be reduced by decreasing the frame rate or gain of the image capture device 240. In one embodiment, an exposure time of the image capture device 240 may be proportional to or inversely proportional to the gain of the image capture device 240.

The sensor 250 can generate sensed data. The sensor 250 may include but is not limited to an image capture device, an electronic compass, a magnetometer, or an accelerometer. The mobile device 200 can implement self-tracking or implement its own pose estimation according to the sensed data. The processor 210 can dynamically adjust the power consumption of the sensor 250. For example, processor 210 may cause the power consumption of the sensor 250 to be reduced by decreasing the frame rate or gain of the sensor 250.

When the mobile device 200 is an HMD, the mobile device 200 may further include a display coupled to the processor 210. The display can be used to display image data, such as providing an XR environment or XR scene for the user wearing the HMD. The display may include a liquid-crystal display (LCD) or an organic light-emitting diode (OLED) display. In one embodiment, the display may provide an image beam to the eyes of the user to form an image on the retina of the user, so that the user can see the XR scene created by the HMD.

The mobile device 100 can obtain the sensed data through the sensor 150 and transmit the sensed data to the mobile device 200. The mobile device 200 can determine the status of the mobile device 100 according to the sensed data or obtain the environmental information of the location of the mobile device 100 from the sensed data. The mobile device 200 can track the location or the pose of the mobile device according to the sensed data. The mobile device 200 can detect the illumination of the light source 140 to track the location or the pose of the mobile device 100. That is, the mobile device 200 can track the location or the pose of the mobile device 100 according to the sensed data or the illumination of the light source 140 from the mobile device 100.

In some cases, tracking the mobile device 100 according to the sensed data or tracking the mobile device 100 according to the illumination of the light source 140 may produce undesirable results. The mobile device 100 can adjust the power consumption of the sensor 150 or the power consumption of the light source 140 accordingly. For example, when the mobile device 100 or the mobile device 200 determines that the current environment distorts the sensed data, the mobile device 100 can reduce the power consumption of the sensor 150 or not reduce the power consumption of the light source 140 (e.g., maintain or increase the power consumption of the light source 140) to avoid the distorted sensed data from overly affecting the tracking results of the mobile device 100. For another example, when the mobile device 100 or the mobile device 200 determines that the current posture of the mobile device 100 causes the illumination of the light source 140 to be difficult to detect, the mobile device 100 can reduce the power consumption of the light source 140 or not reduce the power consumption of the sensor 150 to enhance the impact of the sensed data on the tracking results of the mobile device 100.

In one embodiment, the image capture device 240 of the mobile device 200 can detect the illumination provided by the light source 140 to determine whether the light source 140 is located in a field of view (FOV) of the image capture device 240 and produce determined results. The mobile device 200 can send the determined result to the mobile device 100. The mobile device 100 can adjust the power consumption of the light source 140 or the power consumption of the sensor 150 according to the determined result. The mobile device 200 can adjust the power consumption of the image capture device 240 according to the determination result.

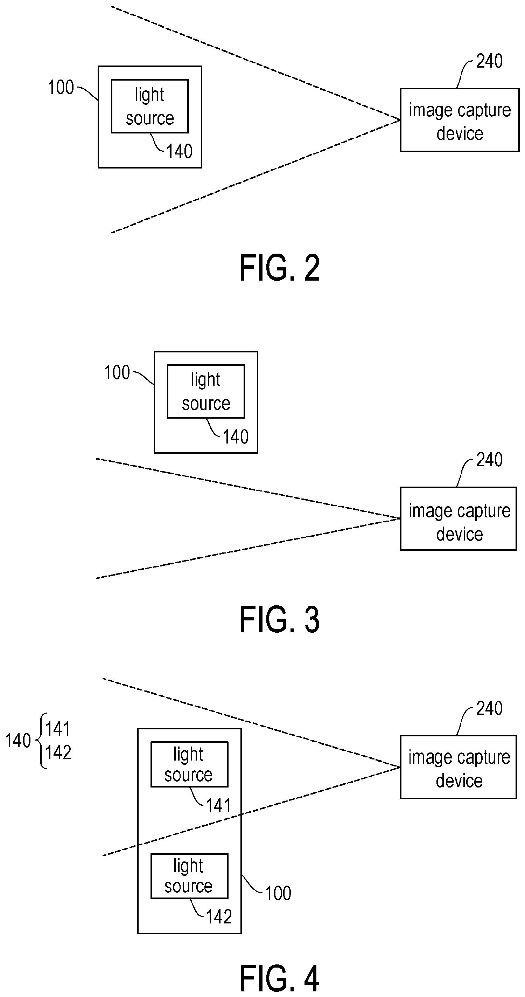

FIG. 2 illustrates a schematic diagram of a light source 140 located in a field of view of an image capture device 240 according to an embodiment of the disclosure. When the light source 140 is located in the field of view of the image capture device 240, the mobile device 100 can reduce the power consumption of the sensor 150 or not reduce the power consumption of the light source 140.

FIG. 3 illustrates a schematic diagram of a light source 140 located outside a field of view of an image capture device 240 according to an embodiment of the disclosure. When the light source 140 is located outside the field of view of the image capture device 240, the mobile device 100 can reduce the power consumption of the light source 140 or not reduce the power consumption of the sensor 150.

FIG. 4 illustrates a schematic diagram of multiple light sources 140 respectively located in a field of view and outside the field of view of an image capture device 240 according to an embodiment of the disclosure. It is assumed that the light sources 140 include a light source 141 and a light source 142. The light source 141 is located in the field of view of the image capture device 240, but the light source 142 is located outside the field of view of the image capture device 240. The mobile device 100 can reduce the power consumption of the light source 142 without reducing the power consumption of the light source 141. That is, when there are multiple light sources 140, the mobile device 100 can selectively reduce the power consumption of a part of the light sources 140.

In an embodiment, the mobile device 100 can adjust the power consumption of the light source 140 or the sensor 150 according to a distance between the mobile device 100 and the mobile device 200. The mobile device 200 can adjust the power consumption of the image capture device 240 or the sensor 250 according to the distance. The distance can be measured by the sensor 150 of the mobile device 100 or by the image capture device 240 or the sensor 250 of the mobile device 200.

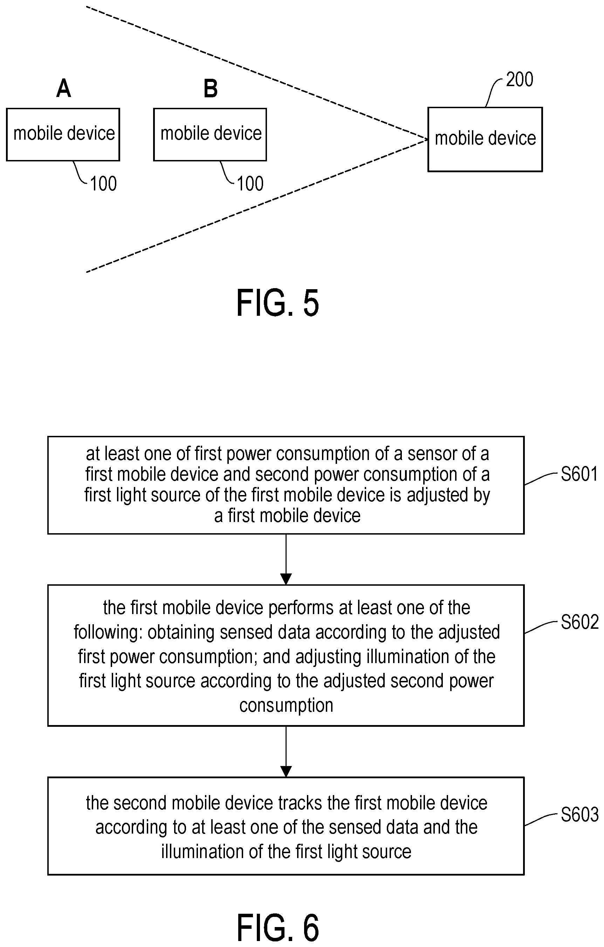

FIG. 5 illustrates a schematic diagram of relative positions of the mobile device 100 and the mobile device 200 according to an embodiment of the disclosure. The mobile device 100 can adjust the power consumption of the light source 140, so that the power consumption of the light source 140 is proportional to the distance between the mobile device 100 and the mobile device 200. For example, when the mobile device 100 is in a position A, the mobile device 100 can adjust the power consumption of the light source 140 to 100%. When the mobile device 100 is in a position B, the mobile device 100 can adjust the power consumption of the light source 140 to 50%.

In one embodiment, the mobile device 100 can adjust the power consumption of the light source 140 or the sensor 150 according to a movement speed of the mobile device 100, so that the power consumption is proportional to the movement speed of the mobile device 100. On the other hand, the mobile device 200 can adjust the power consumption of the image capture device 240 or the sensor 250 according to the movement speed of the mobile device 100, so that the power consumption is proportional to the movement speed of the mobile device 100. The movement speed of the mobile device 100 can be measured by the sensor 150 of the mobile device 100 or by the image capture device 240 or the sensor 250 of the mobile device 200.

For example, when the mobile device 100 moves at a high speed, the mobile device 100 can adjust the power consumption of the light source 140 to 50% and adjust the frame rate of the sensor 150 to 60 frames per second (FPS). The mobile device 200 can adjust the frame rate of the image capture device 240 to 60FPS, adjust the gain of the image capture device 240 to high gain, and adjust the exposure time of the image capture device 240 to 3 milliseconds. On the other hand, when the mobile device 100 moves at a low speed, the mobile device 100 can adjust the power consumption of the light source 140 to 20% and the frame rate of the sensor 150 to 15FPS. The mobile device 200 can adjust the frame rate of the image capture device 240 to 30FPS, adjust the gain of the image capture device 240 to low gain, and adjust the exposure time of the image capture device 240 to 6 milliseconds.

In an embodiment, the mobile device 100 can adjust the power consumption of the light source 140 or the sensor 150 according to the posture (e.g., six degrees of freedom posture) of the mobile device 100. The mobile device 200 can adjust the power consumption of the image capture device 240 or the sensor 250 according to the posture of the mobile device 100. The posture of the mobile device 100 can be detected by the sensor 140 of the mobile device 100 or detected by the image capture device 240 or the sensor 250 of the mobile device 200.

For example, it is assumed that the posture of the mobile device 100 makes it difficult for the light source 140 of the mobile device 100 to be detected by the image capture device 240 of the mobile device 200. The mobile device 100 can reduce the power consumption of the light source 140 without reducing the power consumption of the sensor 150. The mobile device 200 can reduce the power consumption or frame rate of the image capture device 240.

In an embodiment, the mobile device 100 can adjust the power consumption of the light source 140 or the sensor 150 according to the ambient brightness. The mobile device 200 can adjust the power consumption of the image capture device 240 or the sensor 250 according to the ambient brightness. The ambient brightness can be measured by the sensor 150 of the mobile device 100 or by the image capture device 240 or the sensor 250 of the mobile device 200.

For example, it is assumed that the sensor 150 is an image capture device. When the ambient brightness is too high, the illumination of the light source 140 is difficult to detect. Accordingly, the mobile device 100 can reduce the power consumption of the sensor 150 (or the gain of the sensor 150, such as light sensitivity) without reducing the power consumption of the light source 140. When the ambient brightness is medium, the illumination of the light source 140 is easier to detect. Accordingly, the mobile device 100 can reduce the power consumption of the light source 140 without reducing the power consumption of the sensor 150 (or the gain of the sensor 150, such as light sensitivity). When the ambient brightness is too dark, the illumination of the light source 140 is much easier to detect, but the sensor 150 may not be able to detect any objects. Accordingly, the mobile device 100 can further reduce the power consumption of the light source 140 and disable the sensor 150.

It is assumed that the sensor 150 is an image capture device. In one embodiment, the mobile device 100 may reduce the power consumption of the sensor 150 according to environmental factors such as lack of texture, reflection, repeating patterns, or open space. Lack of texture: the surface of objects around the sensor 150 lacks texture, making it difficult for the object to be detected by the sensor 150. Reflection: the brightness of the environment around the sensor 150 is too high, making it difficult for the sensor 150 to detect objects. Repeating pattern: the texture of the surface of the object around the sensor 150 is a repeating pattern, making it difficult for the sensor 150 to recognize the object. Open space: the field where the sensor 150 is located is too large to correctly position the mobile device 100 or the mobile device 200 according to the captured images.

It is assumed that the sensor 150 is an electronic compass. In one embodiment, the mobile device 100 can reduce the power consumption of the sensor 150 according to environmental factors such as metal layout, magnetic field distribution, or power plant distribution. Metal layout: there are too many metal objects around the sensor 150, making it difficult for the sensor 150 to detect the mobile device 200. Magnetic field distribution or electric field distribution: there is a strong magnetic field or electric field around the sensor 150, which causes the electronic compass to fail to operate correctly.

In one embodiment, the mobile device 100 can reduce the power consumption of the light source 140 according to environmental factors including electromagnetic wave distribution. For example, if there is strong sunlight, infrared light, or reflected light in the environment around the mobile device 100, the illumination of the light source 140 may be difficult to detect by the image capture device 240. Accordingly, the mobile device 100 can reduce the power consumption of the light source 140. The electromagnetic wave distribution can be measured by the sensor 150 of the mobile device 100 or by the image capture device 240 or the sensor 250 of the mobile device 200.

FIG. 6 illustrates a flow chart of a tracking method for power saving according to an embodiment of the disclosure, wherein the tracking method can be implemented by the tracking system 10 as shown in FIG. 1. In step S601, at least one of first power consumption of the sensor of the first mobile device and second power consumption of a first light source of the first mobile device is adjusted by the first mobile device. In step S602, the first mobile device performs at least one of the following: obtaining sensed data according to the adjusted first power consumption; and adjusting illumination of the first light source according to the adjusted second power consumption. In step S603, the second mobile device tracks the first mobile device according to at least one of the sensed data and the illumination of the first light source.

To sum up, the tracking system of the disclosure can use various methods such as sensors or light sources to track mobile devices. Therefore, even if the application scenario of the tracking system changes, the tracking results of the mobile device can still remain accurate. In addition, the tracking system can determine which tracking technology has better performance in the current application scenario according to factors such as environmental information or the status of the mobile device. The tracking system can dynamically adjust the power consumption of each tracking technology according to the determination results to achieve accurate tracking of mobile devices and power saving.

It will be apparent to those skilled in the art that various modifications and variations can be made to the disclosed embodiments without departing from the appended claims. In view of the foregoing, it is intended that the disclosure covers modifications and variations provided that they fall within the scope of the following claims.

## Claims

1. A tracking system (10) for power saving, comprising:
a first mobile device (100), comprising a sensor (150) and a first light source (140); and
a second mobile device (200), communicatively connected to the first mobile device (100), wherein
the first mobile device (100) is configured to adjust a first power consumption of the sensor (150) and second power consumption of the first light source (140), and is configured to execute the following: obtaining sensed data according to the adjusted first power consumption; and adjusting illumination of the first light source (140) according to the adjusted second power consumption, wherein
the second mobile device (200) is configured to track the first mobile device (100) according to at least one of the sensed data and the illumination of the first light source (140),
wherein the second mobile device (200) comprises an image capture device (240), wherein
the second mobile device (200) is configured to detect the illumination to determine whether the first light source (140) is located in a field of view of the image capture device (240), wherein
in response to the first light source (140) being located in the field of view, the first mobile device (100) is configured to reduce the first power consumption of the sensor(150).

2. The tracking system according to claim 1, wherein
in response to the first light source (140) being outside the field of view, the first mobile device (100) is configured to reduce the second power consumption of the first light source (140).

3. The tracking system according to claim 1, wherein
the first mobile device (100) is configured to adjust the second power consumption of the first light source (140), such that the second power consumption is proportional to a distance between the first mobile device (100) and the second mobile device (200).

4. The tracking system according to claim 1, wherein the sensed data comprises a movement speed of the first mobile device (100), wherein
the first mobile device (100) is configured to adjust the first power consumption of the sensor (150), such that the first power consumption is proportional to the movement speed.

5. The tracking system according to claim 1, wherein the sensed data comprises a movement speed of the first mobile device (100), wherein
the first mobile device (100) is configured to adjust the second power consumption of the first light source (140), such that the second power consumption is proportional to the movement speed.

6. The tracking system according to claim 1, wherein the second mobile device (200) comprises an image capture device (240), and the sensed data comprises a movement speed of the first mobile device (100), wherein
the second mobile device (200) is configured to adjust third power consumption of the image capture device (240), such that the third power consumption is proportional to the movement speed.

7. The tracking system according to claim 1, wherein the sensed data comprises a posture of the first mobile device (100), wherein
the first mobile device (100) is configured to adjust the second power consumption of the first light source (140) according to the posture.

8. The tracking system according to claim 1, wherein the second mobile device (200) comprises an image capture device (240), and the sensed data comprises a posture of the first mobile device (100), wherein
the second mobile device (200) is configured to adjust third power consumption of the image capture device (240) according to the posture.

9. The tracking system according to claim 1, wherein the sensed data comprises ambient brightness, wherein
the first mobile device (100) is configured to adjust the at least one of the first power consumption and the second power consumption according to the ambient brightness.

10. The tracking system according to claim 1, wherein the second mobile device (200) comprises an image capture device (240), and the sensed data comprises ambient brightness, wherein
the second mobile device (200) is configured to adjust third power consumption of the image capture device (240) according to the ambient brightness.

11. The tracking system according to claim 1, wherein the sensor (150) comprises an image capture device (240), wherein the first mobile device (100) is configured to reduce the first power consumption of the sensor (150) according to at least one of the following environmental factors: lack of texture, reflection, repeating patterns, and open space.

12. The tracking system according to claim 1, wherein the sensor (150) comprises an electronic compass, wherein the first mobile device (100) is configured to reduce the first power consumption of the sensor (150) according to at least one of the following environmental factors: metal layout; magnetic field distribution, and electric field distribution.

13. The tracking system according to claim 1, wherein the first mobile device (100) is configured to reduce the second power consumption of the first light source (140) according to environmental factors comprising electromagnetic wave distribution.

14. The tracking system according to claim 1, wherein the sensor (150) comprises at least one of the following: an image capture device (240), an electronic compass, a magnetometer, and an accelerometer.

## Patentansprüche

1. Ein Ortungssystem (10) zur Energieeinsparung, das Folgendes aufweist:
ein erstes mobiles Gerät (100), das einen Sensor (150) und eine erste Lichtquelle (140) aufweist; und
ein zweites mobiles Gerät (200), das mit dem ersten mobilen Gerät (100) in Kommunikationsverbindung steht, wobei
das erste mobile Gerät (100) so konfiguriert ist, dass es einen ersten Stromverbrauch des Sensors (150) und einen zweiten Stromverbrauch der ersten Lichtquelle (140) anpasst, und so konfiguriert ist, dass es Folgendes ausführt: Erlangen von Sensordaten entsprechend dem angepassten ersten Stromverbrauch; und Anpassen der Beleuchtungsstärke der ersten Lichtquelle (140) entsprechend dem angepassten zweiten Stromverbrauch, wobei
das zweite mobile Gerät (200) so konfiguriert ist, dass es das erste mobile Gerät (100) entsprechend wenigstens einem der erfassten Daten und der Beleuchtungsstärke der ersten Lichtquelle (140) verfolgt,
wobei das zweite mobile Gerät (200) eine Bildaufnahmevorrichtung (240) aufweist, wobei
das zweite mobile Gerät (200) so konfiguriert ist, dass es die Beleuchtungsstärke erfasst, um festzustellen, ob sich die erste Lichtquelle (140) im Sichtfeld der Bildaufnahmevorrichtung (240) befindet, wobei
das erste mobile Gerät (100) so konfiguriert ist, dass es als Reaktion darauf, dass sich die erste Lichtquelle (140) im Sichtfeld befindet, den ersten Stromverbrauch des Sensors (150) reduziert.

2. Das Ortungssystem nach Anspruch 1, wobei
als Reaktion darauf, dass sich die erste Lichtquelle (140) außerhalb des Sichtfelds befindet, das erste mobile Gerät (100) so konfiguriert ist, dass es den zweiten Stromverbrauch der ersten Lichtquelle (140) reduziert.

3. Das Ortungssystem nach Anspruch 1, wobei
das erste mobile Gerät (100) ist so konfiguriert, dass es den zweiten Stromverbrauch der ersten Lichtquelle (140) so anpasst, dass der zweite Stromverbrauch proportional zu einem Abstand zwischen dem ersten mobilen Gerät (100) und dem zweiten mobilen Gerät (200) ist.

4. Das Ortungssystem nach Anspruch 1, wobei die erfassten Daten eine Bewegungsgeschwindigkeit des ersten mobilen Geräts (100) aufweisen, wobei
das erste mobile Gerät (100) so konfiguriert ist, dass es den ersten Stromverbrauch des Sensors (150) so anpasst, dass der erste Stromverbrauch proportional zur Bewegungsgeschwindigkeit ist.

5. Das Ortungssystem nach Anspruch 1, wobei die erfassten Daten eine Bewegungsgeschwindigkeit des ersten mobilen Geräts (100) aufweisen, wobei
das erste mobile Gerät (100) so konfiguriert ist, dass es den zweiten Stromverbrauch der ersten Lichtquelle (140) so anpasst, dass der zweite Stromverbrauch proportional zur Bewegungsgeschwindigkeit ist.

6. Das Ortungssystem nach Anspruch 1, wobei das zweite mobile Gerät (200) eine Bildaufnahmevorrichtung (240) aufweist und die erfassten Daten eine Bewegungsgeschwindigkeit des ersten mobilen Geräts (100) aufweisen, wobei
das zweite mobile Gerät (200) so konfiguriert ist, dass es den dritten Stromverbrauch der Bildaufnahmevorrichtung (240) so anpasst, dass der dritte Stromverbrauch proportional zur Bewegungsgeschwindigkeit ist.

7. Das Ortungssystem nach Anspruch 1, wobei die erfassten Daten eine Lage des ersten mobilen Geräts (100) aufweisen, wobei
das erste mobile Gerät (100) so konfiguriert ist, dass es den zweiten Stromverbrauch der ersten Lichtquelle (140) entsprechend der Lage anpasst.

8. Das Ortungssystem nach Anspruch 1, wobei das zweite mobile Gerät (200) eine Bildaufnahmevorrichtung (240) aufweist und die erfassten Daten eine Lage des ersten mobilen Geräts (100) aufweisen, wobei
das zweite mobile Gerät (200) so konfiguriert ist, dass es den dritten Stromverbrauch der Bildaufnahmevorrichtung (240) entsprechend der Lage anpasst.

9. Das Ortungssystem nach Anspruch 1, wobei die erfassten Daten die Umgebungshelligkeit aufweisen, wobei
das erste mobile Gerät (100) so konfiguriert ist, dass es den ersten Stromverbrauch und/oder den zweiten Stromverbrauch entsprechend der Umgebungshelligkeit anpasst.

10. Das Ortungssystem nach Anspruch 1, wobei das zweite mobile Gerät (200) eine Bildaufnahmevorrichtung (240) aufweist und die erfassten Daten die Umgebungshelligkeit aufweisen, wobei
das zweite mobile Gerät (200) so konfiguriert ist, dass es den dritten Stromverbrauch der Bildaufnahmevorrichtung (240) entsprechend der Umgebungshelligkeit anpasst.

11. Das Ortungssystem nach Anspruch 1, wobei der Sensor (150) eine Bildaufnahmevorrichtung (240) aufweist, wobei das erste mobile Gerät (100) so konfiguriert ist, dass es den ersten Stromverbrauch des Sensors (150) entsprechend wenigstens einem der folgenden Umgebungsfaktoren reduziert: fehlende Textur, Reflexion, sich wiederholende Muster und offener Raum.

12. Das Ortungssystem nach Anspruch 1, wobei der Sensor (150) einen elektronischen Kompass aufweist, wobei das erste mobile Gerät (100) so konfiguriert ist, dass es den ersten Stromverbrauch des Sensors (150) entsprechend wenigstens einem der folgenden Umgebungsfaktoren reduziert: Metallanordnung; Magnetfeldverteilung und elektrische Feldverteilung.

13. Das Ortungssystem nach Anspruch 1, wobei das erste mobile Gerät (100) so konfiguriert ist, dass es den zweiten Stromverbrauch der ersten Lichtquelle (140) entsprechend Umgebungsfaktoren, die die Verteilung elektromagnetischer Wellen aufweisen, reduziert.

14. Das Ortungssystem nach Anspruch 1, wobei der Sensor (150) wenigstens eines der folgenden Elemente aufweist: eine Bildaufnahmevorrichtung (240), einen elektronischen Kompass, ein Magnetometer und einen Beschleunigungsmesser.

## Revendications

1. Système de suivi (10) destiné à économiser de l'énergie, comprenant:
un premier appareil mobile (100), comprenant un capteur (150) et une première source lumineuse (140); et
un deuxième appareil mobile (200), connecté de manière communicative au premier appareil mobile (100), dans lequel
le premier appareil mobile (100) est configuré pour ajuster une première consommation d'énergie du capteur (150) et une deuxième consommation d'énergie de la première source lumineuse (140), et est configuré pour exécuter les opérations suivantes: obtenir des données détectées en fonction de la première consommation d'énergie ajustée; et ajuster l'éclairage de la première source lumineuse (140) en fonction de la deuxième consommation d'énergie ajustée, dans lequel
le deuxième appareil mobile (200) est configuré pour suivre le premier appareil mobile (100) en fonction d'au moins l'une parmi les données détectées et l'intensité lumineuse de la première source lumineuse (140),
dans lequel le deuxième appareil mobile (200) comprend un appareil de capture d'images (240), dans lequel
le deuxième appareil mobile (200) est configuré pour détecter l'intensité lumineuse afin de déterminer si la première source lumineuse (140) se trouve dans le champ de vision du appareil de capture d'images (240), dans lequel
en réponse au fait que la première source lumineuse (140) se trouve dans le champ de vision, le premier appareil mobile (100) est configuré pour réduire la première consommation d'énergie du capteur (150).

2. Système de suivi selon la revendication 1, dans lequel
en réponse au fait que la première source lumineuse (140) se trouve en dehors du champ de vision, le premier appareil mobile (100) est configuré pour réduire la deuxième consommation d'énergie de la première source lumineuse (140).

3. Système de suivi selon la revendication 1, dans lequel
le premier appareil mobile (100) est configuré pour ajuster la deuxième consommation d'énergie de la première source lumineuse (140), de telle sorte que cette deuxième consommation d'énergie soit proportionnelle à la distance entre le premier appareil mobile (100) et le deuxième appareil mobile (200).

4. Système de suivi selon la revendication 1, dans lequel les données détectées comprennent une vitesse de déplacement du premier appareil mobile (100), dans lequel
le premier appareil mobile (100) est configuré pour ajuster la première consommation d'énergie du capteur (150), de telle sorte que la première consommation d'énergie soit proportionnelle à la vitesse de déplacement.

5. Système de suivi selon la revendication 1, dans lequel les données détectées comprennent une vitesse de déplacement du premier appareil mobile (100), dans lequel
le premier appareil mobile (100) est configuré pour ajuster la deuxième consommation d'énergie de la première source lumineuse (140), de telle sorte que la deuxième consommation d'énergie soit proportionnelle à la vitesse de déplacement.

6. Système de suivi selon la revendication 1, dans lequel le deuxième appareil mobile (200) comprend un appareil de capture d'images (240), et les données détectées comprennent une vitesse de déplacement du premier appareil mobile (100), dans lequel
le deuxième appareil mobile (200) est configuré pour ajuster la troisième consommation d'énergie du appareil de capture d'images (240), de telle sorte que la troisième consommation d'énergie soit proportionnelle à la vitesse de déplacement.

7. Système de suivi selon la revendication 1, dans lequel les données détectées comprennent une posture du premier appareil mobile (100), dans lequel
le premier appareil mobile (100) est configuré pour ajuster la deuxième consommation d'énergie de la première source lumineuse (140) en fonction de la posture.

8. Système de suivi selon la revendication 1, dans lequel le deuxième appareil mobile (200) comprend un appareil de capture d'images (240), et les données détectées comprennent une orientation du premier appareil mobile (100), dans lequel
le deuxième appareil mobile (200) est configuré pour ajuster une troisième consommation d'énergie du appareil de capture d'images (240) en fonction de ladite posture.

9. Système de suivi selon la revendication 1, dans lequel les données détectées comprennent la luminosité ambiante, dans lequel
le premier appareil mobile (100) est configuré pour ajuster au moins l'une parmi la première consommation d'énergie et la deuxième consommation d'énergie en fonction de la luminosité ambiante.

10. Système de suivi selon la revendication 1, dans lequel le deuxième appareil mobile (200) comprend un appareil de capture d'images (240), et les données détectées comprennent la luminosité ambiante, dans lequel
le deuxième appareil mobile (200) est configuré pour ajuster une troisième consommation d'énergie du appareil de capture d'images (240) en fonction de la luminosité ambiante.

11. Système de suivi selon la revendication 1, dans lequel le capteur (150) comprend un appareil de capture d'images (240), dans lequel le premier appareil mobile (100) est configuré pour réduire la première consommation d'énergie du capteur (150) en fonction d'au moins l'un des facteurs environnementaux suivants: absence de texture, réflexion, motifs répétitifs et espace ouvert.

12. Système de suivi selon la revendication 1, dans lequel le capteur (150) comprend une boussole électronique, le premier appareil mobile (100) étant configuré pour réduire la première consommation d'énergie du capteur (150) en fonction d'au moins l'un des facteurs environnementaux suivants: disposition des métaux; distribution du champ magnétique; et distribution du champ électrique.

13. Système de suivi selon la revendication 1, dans lequel le premier appareil mobile (100) est configuré pour réduire la deuxième consommation d'énergie de la première source lumineuse (140) en fonction de facteurs environnementaux comprenant la distribution des ondes électromagnétiques.

14. Système de suivi selon la revendication 1, dans lequel le capteur (150) comprend au moins l'un des éléments suivants: un appareil de capture d'images (240), une boussole électronique, un magnétomètre et un accéléromètre.
